# EUROPEAN PATENT APPLICATION

(11) **EP 4 778 708 A1**
(43) Date of publication of application: **22.07.2026**
(21) Application number: 25216349.8
(22) Date of filing: 17.11.2025
(51) Int. Cl.: B29C 70/30, B29C 70/86, B32B 5/26

(54) **COMPOSITE STRUCTURE WITH AN INFUSED FUNCTIONAL STRUCTURE**

(30) Priority: 20.01.2025 US 202519032174
(71) Applicant: The Boeing Company, Arlington, VA 22202 (US)
(72) Inventor: SERENCSITS, William L., Arlington, 22202 (US); RAISSI, Holly M., Arlington, 22202 (US); FRY, Jessica Offutt, Arlington, 22202 (US)
(74) Representative: Boult Wade Tennant LLP

(57) **Abstract**

Composite structures (202) and methods of forming composite structures (202) are presented. A composite structure (202) comprises a first plurality of prepreg plies (231), a second plurality of prepreg plies (233), and an infused functional structure (204) between the first plurality of prepreg plies and the second plurality of prepreg plies. The infused functional structure comprises a first number of insulative layers (206), a second number of insulative layers (210), a functional ply (208) comprising a number of functional components (214) between the first number of insulative layers and the second number of insulative layers, and a resin (222) infused into the first number of insulative layers (206) and the second number of insulative layers (210).

## Description

### BACKGROUND INFORMATION

### Field:

The present disclosure relates generally to composite manufacturing and more specifically to manufacturing composite structures with functional components.

### Background:

Adding functional components to a carbon fiber reinforced polymer (CFRP) structure has significant opportunity to decrease part complexity and increase capabilities of composite parts. The illustrative examples recognize and take into account that functional components can include at least one of integral heating for de-icing, integrated structural health monitoring, and integrated circuitry for other components (antenna, lighting, control, other).

It is challenging to incorporate functional components into a pre-impregnated material system. Therefore, it would be desirable to have a method and apparatus that takes into account at least some of the issues discussed above, as well as other possible issues. For example, it would be desirable to present new methods of incorporating functional components.

### SUMMARY

An example of the present disclosure provides a composite structure. The composite structure comprises a first plurality of prepreg plies, a second plurality of prepreg plies, and an infused functional structure between the first plurality of prepreg plies and the second plurality of prepreg plies. The infused functional structure comprises a first number of insulative layers, a second number of insulative layers, a functional ply comprising a number of functional components between the first number of insulative layers and the second number of insulative layers, and a resin infused into the first number of insulative layers and the second number of insulative layers.

Another example of the present disclosure provides a composite structure. The composite structure comprises a first plurality of composite plies; a second plurality of composite plies; and an infused functional structure between the first plurality of composite plies and the second plurality of composite plies. The infused functional structure comprises a first number of insulative layers comprising a cured resin, a second number of insulative layers comprising the cured resin, and a functional ply comprising a number of functional components between the first number of insulative layers and the second number of insulative layers.

Yet another example of the present disclosure provides a method of forming a composite structure. An infused functional structure is partially cured into a first number of insulative layers, a second number of insulative layers, and a functional ply between the first number of insulative layers and the second number of insulative layers to form a functional structure. The infused functional structure is laid up between a first plurality of prepreg plies and a second plurality of prepreg plies. The first plurality of prepreg plies and the second plurality of prepreg plies are cured while completing cure of the infused functional structure to form the composite structure.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
Figure 1 is an illustration of an aircraft;
Figure 2 is an illustration of a block diagram of a manufacturing environment;
Figure 3 is an illustration of a cross-sectional view of an infused functional structure;
Figure 4 is an illustration of an infusion cure cycle graph of an infused functional structure example;
Figure 5 is an illustration of a cross-sectional view of a composite structure;
Figure 6 is an illustration of an infusion cure cycle graph of an infused functional structure example;
Figure 7 is a flowchart of a method of forming a composite structure;
Figure 8 is a flowchart of a method of forming a composite structure;
Figure 9 is an illustration of an aircraft manufacturing and service method in a form of a block diagram; and
Figure 10 is an illustration of an aircraft in a form of a block diagram.

### DETAILED DESCRIPTION

The illustrative examples recognize and take into account several considerations. The illustrative examples recognize and take into account that conventional methods of composite manufacturing rely on the resin in the prepreg material to propagate into the functional component. The illustrative examples recognize and take into account that often there is not enough resin available to fully impregnate the functional component, causing resin starvation throughout the final structure. The illustrative examples recognize and take into account that the pre-preg is not designed to have much additional resin to fill the voids in the un-impregnated elements, and the un-impregnated elements do not have sufficient tack (stickiness) to be laid up with the part and remain located in a dimensionally accurate position while the remainder of the part is fabricated.

The illustrative examples recognize and take into account that these methods of manufacturing for integration of non-composite elements into a pre-impregnated composite structure currently rely on existing resin in the material to encapsulate the non-composite element. The illustrative examples recognize and take into account that current technology allows woven elements, such as heaters, to be incorporated into a resin-infused structure by integrating the heating elements into a fiberglass or other material carrier film, and then infused in a carbon structure.

The illustrative examples recognize and take into account that integrated electrical components can desirably utilize insulation from the carbon composite reinforcement, as carbon filaments are electrical conductors. The illustrative examples recognize and take into account that conventional insulation and carrier materials can be dry fiberglass, however if those materials are not pre-impregnated with resin, they will cause resin starvation in the part as a whole.

The illustrative examples recognize and take into account that elements, such as heaters, can be woven into a carrier, such as fiberglass. The illustrative examples allow the elements to be partially cured into a composite structure, which can be assembled with traditional prepreg materials, and then fully co-cured to a unitized composite structure.

The illustrative examples provide a method to perform a low degree of cure for a resin infused structure carrying non-composite elements such as heaters, laying them up with a prepreg composite material system, and then performing a full cure cycle to bring the entire structure up to a full Degree of Cure. The illustrative examples provide pre-curing of the un-impregnated elements to a lower degree of cure with a resin system compatible with the desired prepreg system.

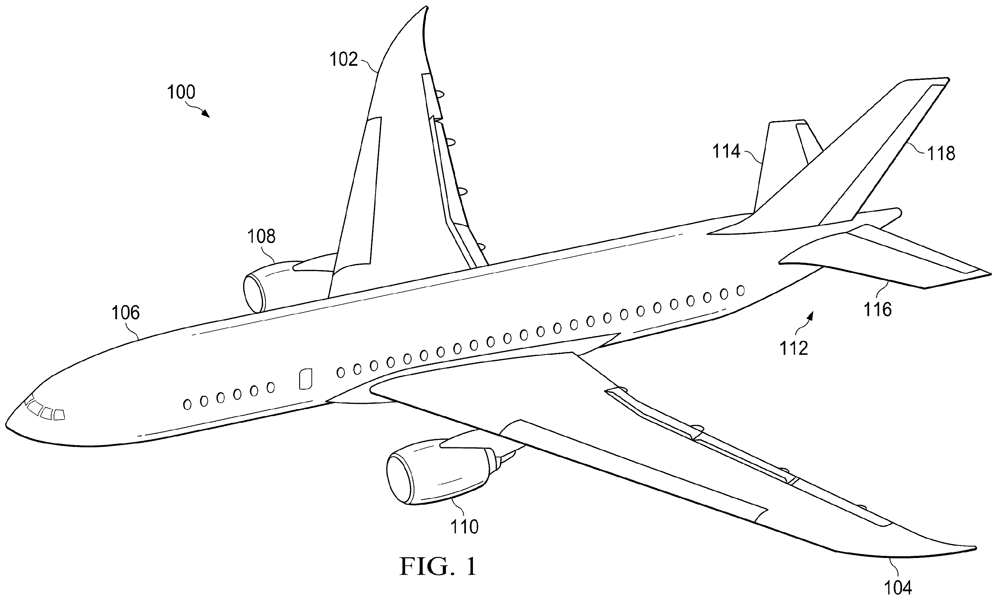

Turning now to Figure 1, an illustration of an aircraft is depicted in accordance with an illustrative example. Aircraft 100 has wing 102 and wing 104 attached to body 106. Aircraft 100 includes engine 108 attached to wing 102 and engine 110 attached to wing 104.

Body 106 has tail section 112. Horizontal stabilizer 114, horizontal stabilizer 116, and vertical stabilizer 118 are attached to tail section 112 of body 106.

Aircraft 100 is an example of an aircraft that can have functional components within composite structures. Aircraft 100 is an example of an aircraft that can have composite structures with infused functional structures formed using at least one of method 700 or method 800. Aircraft 100 is an example of an aircraft that can have a physical implementation of composite structure 202 with infused functional structure 204.

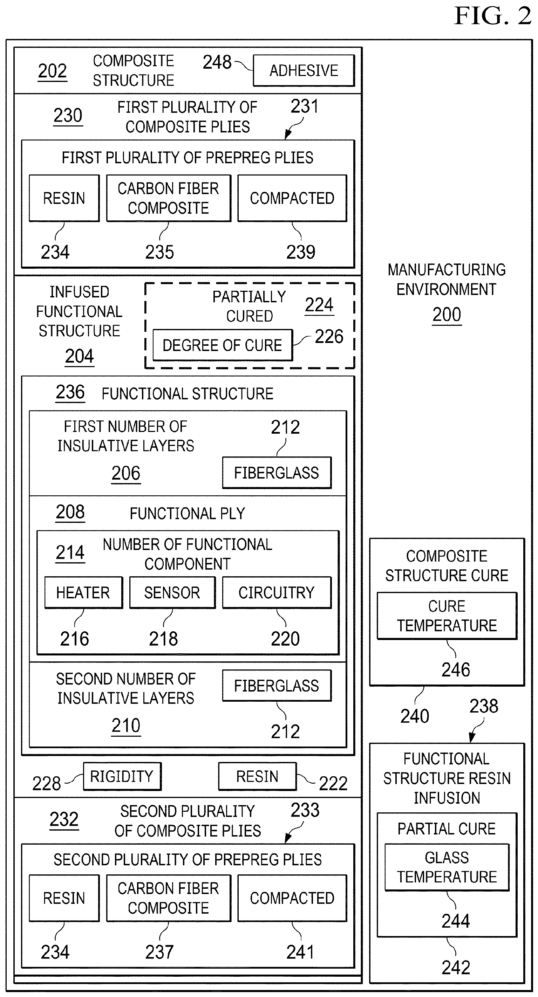

Turning now to Figure 2, an illustration of a block diagram of a manufacturing environment is depicted in accordance with an illustrative example. Manufacture of composite structure 202 with infused functional structure 204 can be performed in manufacturing environment 200.

In the manufacture of composite structure 202, there is an initial infusion and B stage cure of infused functional structure 204. Functional structure 236 is laid up of first number of insulative layers 206, second number of insulative layers 210, and functional ply 208. Functional ply 208 may also be referred to as a carrier ply. First number of insulative layers 206, second number of insulative layers 210, and functional ply 208 are infused separately from prepreg plies of composite structure 202 on a dedicated tool during functional structure resin infusion 238.

In some illustrative examples, a low cost tool material, such as aluminum or steel, can be used as this portion of cure can be isothermal. In some illustrative examples, once infused functional structure 204 is cured to a point at which infused functional structure 204 can be handled without damage at room temperature. In some illustrative examples, once infused functional structure 204 is cured to a point at which infused functional structure 204 can be handled safely at room temperature, infused functional structure 204 can be incorporated into a prepreg layup, and then cured to full degree of cure for a fully co-cured part, composite structure 202.

Some illustrative examples provide the inclusion of a number of functional components 214 such as heater 216, sensor 218, circuitry 220, health monitoring, or any other desirable functional component into a carrier structure, functional structure 236. Functional structure 236 is then infused and partially cured during functional structure resin infusion 238, and then later fully cured into composite structure 202.

In some illustrative examples, heater 216 in infused functional structure 204 can be utilized in the pre-cured component to accelerate final cure of composite structure 202. In some illustrative examples, heater 216 in infused functional structure 204 is used to assist with partially cured 224 infused functional structure 204 reaching softening temperature so that it can conform to the composite layup before infused functional structure 204 hardens past conformance.

Prior to composite structure cure 240, composite structure 202 comprises first plurality of prepreg plies 231, a second plurality of prepreg plies 233, and infused functional structure 204 between first plurality of prepreg plies 231 and second plurality of prepreg plies 233. Infused functional structure 204 comprises first number of insulative layers 206, second number of insulative layers 210, functional ply 208 comprising number of functional components 214 between first number of insulative layers 206 and second number of insulative layers 210, and resin 222 infused into first number of insulative layers 206 and second number of insulative layers 210.

In some illustrative examples, first number of insulative layers 206 comprise fiberglass 212. In some illustrative examples, second number of insulative layers 210 comprise fiberglass 212.

In some illustrative examples, number of functional components 214 comprises at least one of heater 216, sensor 218, or circuitry 220. Number of functional components 214 present improvements to composite structure 202. Heating elements, such as heater 216, can be utilized for applications such as de-icing of leading edges and engine nacelle composites. In some illustrative examples, electrical de-icing is more efficient, only heating the structural element at risk for icing, and simpler.

In some illustrative examples, number of functional components 214 can be used for other applications, such as electrical traces for lights, radio or radar transmitters or receivers, or structural health monitoring for composites. Integrating number of functional components 214 can simplify the production process, saving time and cost.

In some illustrative examples, resin 222 in infused functional structure 204 is compatible with resin 234 of first plurality of prepreg plies 231 and of second plurality of prepreg plies 233.

In some illustrative examples, first plurality of prepreg plies 231 and second plurality of prepreg plies 233 comprise carbon fiber composite. In this and certain other illustrative examples, first plurality of prepreg plies 231 comprise carbon fiber composite 235. Second plurality of prepreg plies 233 comprise carbon fiber composite 237. In some illustrative examples, first plurality of prepreg plies 231 are compacted 239 prior to laying up composite structure 202. In some illustrative examples, second plurality of prepreg plies 233 are compacted 241 prior to laying up composite structure 202.

When infused functional structure 204 is laid up in composite structure 202, infused functional structure 204 is partially cured 224. Infused functional structure 204 has a rigidity 228 sufficient for transport of infused functional structure 204. Degree of cure 226 of infused functional structure 204 is controlled so that rigidity 228 is sufficient to transport infused functional structure 204. Degree of cure 226 is less than a complete cure.

Glass transition development is limited during partial cure 242 to allow for infused functional structure 204 to desirably interact with a layup of composite plies for composite structure 202. In some illustrative examples, partial cure 242 can be described as controlling glass temperature 244 of partially cured 224 infused functional structure 204 by limiting the progression of cure by performing a limited cure cycle. In some illustrative examples, in the initial cure, partial cure 242, is raised to a point where infused functional structure 204 can be handled without deforming infused functional structure 204 out of tolerance.

When the partially cured 224 infused functional structure 204 is placed onto the layup of composite plies for composite structure 202, first plurality of composite plies 230 and second plurality of composite plies 232, infused functional structure 204 may not have perfect mating due to tolerances in tooling and ply thickness. Composite structure cure 240 has cure temperature 246 above glass temperature 244 of partial cure 242 during functional structure resin infusion 238. When the final cure, composite structure cure 240, is performed, the temperature of the cure environment (autoclave, oven, or heated tooling) is raised above glass temperature 244 of partially cured 224 infused functional structure 204, allowing it to relax and conform to the rest of composite structure 202 resulting in a fully cured, completely consolidated part.

In some illustrative examples, adhesive 248 is applied between at least one of first plurality of prepreg plies 231 or second plurality of prepreg plies 233 and infused functional structure 204. Adhesive 248 is optional depending upon selected materials.

Following composite structure cure 240, composite structure 202 comprises first plurality of composite plies 230, second plurality of composite plies 232, and infused functional structure 204 between first plurality of composite plies 230 and second plurality of composite plies 232. Infused functional structure 204 comprises first number of insulative layers 206 comprising cured resin 222, second number of insulative layers 210 comprising cured resin 222, and functional ply 208 comprising number of functional components 214 between first number of insulative layers 206 and second number of insulative layers 210. In some illustrative examples, wherein cured resin 222 in infused functional structure 204 is different from but compatible with resin 234 in first plurality of composite plies 230 and second plurality of composite plies 232.

The illustration of manufacturing environment 200 in Figure 2 is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

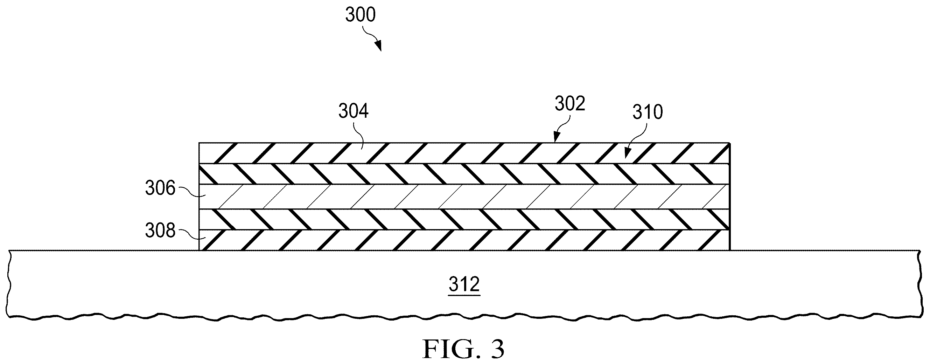

Turning now to Figure 3, an illustration of a cross-sectional view of an infused functional structure is depicted in accordance with an illustrative example. View 300 is a cross-sectional view of infused functional structure 302. Infused functional structure 302 can be used to form a composite structure, such as composite structure 202 of Figure 2. Infused functional structure 302 can be placed into a composite structure to form a portion of a composite structure of aircraft 100 of Figure 1.

Infused functional structure 302 comprises first number of insulative layers 304, second number of insulative layers 308, and functional ply 306 comprising a number of functional components between first number of insulative layers 304 and second number of insulative layers 308. Resin 310 has been infused into first number of insulative layers 304 and second number of insulative layers 308. Infused functional structure 302 is laid up on tool 312.

To form infused functional structure 302, second number of insulative layers 308 is laid up on tool 312. Functional ply 306 and first number of insulative layers 304 are laid up on second number of insulative layers 308 to form a functional structure on tool 312. First number of insulative layers 304, second number of insulative layers 308, and functional ply 306 are vacuum sealed against tool 312 within a compaction bag or similar structure. While under vacuum, resin 310 is infused beneath the compaction bag and into the functional structure comprising first number of insulative layers 304, second number of insulative layers 308, and functional ply 306.

Resin 310 is partially cured on tool 312 to allow for handling. By partially curing resin 310 in infused functional structure 302, resin 310 can be completed cured later in a composite structure.

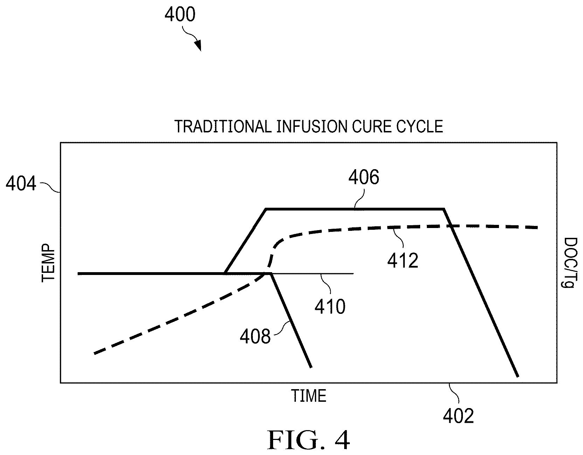

Turning now to Figure 4, an illustration of an infusion cure cycle graph of an infused functional structure is depicted in accordance with an illustrative example. Infusion cure cycle graph 400 can be used to form an infused functional structure to be included in a composite structure of aircraft 100. Infusion cure cycle graph 400 can be used to form infused functional structure 204 of Figure 2. Infusion cure cycle graph 400 can be used to form infused functional structure 302 of Figure 3.

Infusion cure cycle graph 400 has time 402 as an x-axis and temperature 404 as a y-axis. Traditional infusion cure cycle 406 would fully cure the resin in the functional structure. In this and certain other illustrative examples, the infusion is shortened so that resin does not fully cure. In this and certain other illustrative examples, the degree of cure (DoC) does not reach full hardness (~9x%). In this and certain other illustrative examples, the glass temperature (Tg) remains lower than that of a fully cured material.

To perform a partial cure, B stage cure cycle 408 is performed. Part cure progresses to point where part is rigid enough to be handled carefully at room temperature. In this and certain other illustrative examples, room temperature is less than the infused functional structure glass temperature Tg, which is less than the final cure temperature.

B stage cure cycle 408 reaches B stage degree of cure / glass temperature 410. The full cure cycle degree of cure/Tg curve is depicted as curve 412. The limited cure cycle Tg/DoC stops at 410 when temperature is dropped as depicted in B stage cure cycle 408.

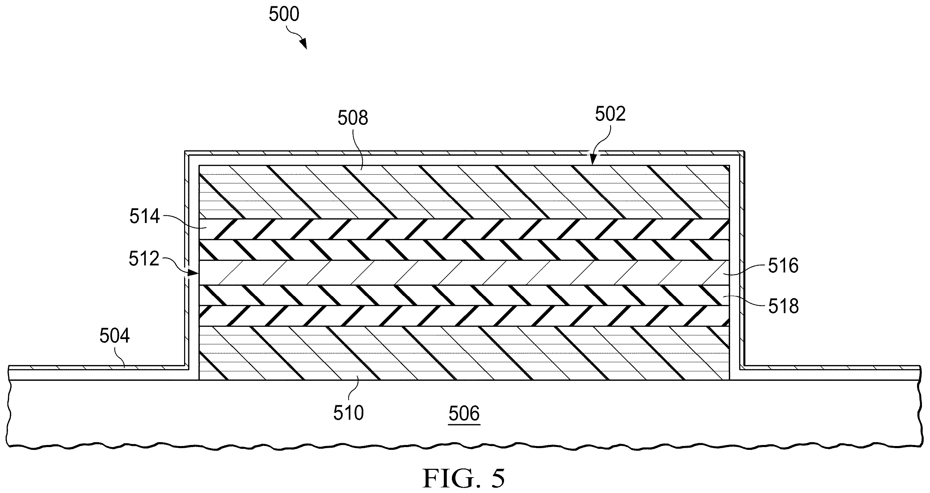

Turning now to Figure 5, an illustration of a cross-sectional view of a composite structure is depicted in accordance with an illustrative example. View 500 is a cross-sectional view of composite structure 502. Composite structure 502 is a physical implementation of composite structure 202 of Figure 2. Infused functional structure 512 of composite structure 502 can be a physical implementation of infused functional structure 204 of Figure 2.

Composite structure 502 comprises first plurality of prepreg plies 508, second plurality of prepreg plies 510, and infused functional structure 512 between first plurality of prepreg plies 508 and second plurality of prepreg plies 510. Infused functional structure 512 comprises first number of insulative layers 514, second number of insulative layers 518, functional ply 516 comprising a number of functional components between first number of insulative layers 514 and second number of insulative layers 518, and a resin (not depicted) infused into first number of insulative layers 514 and second number of insulative layers 518. The resin in infused functional structure 512 is compatible with resin of first plurality of prepreg plies 508 and second plurality of prepreg plies 510.

In some illustrative examples, first number of insulative layers 514 comprises fiberglass. In some illustrative examples, second number of insulative layers 518 comprises fiberglass. In some illustrative examples, first plurality of prepreg plies 508 and second plurality of prepreg plies 510 comprise carbon fiber composite. In some illustrative examples, the number of functional components comprises at least one of a heater, a sensor, or circuitry.

Composite structure 502 is positioned on tool 506 to be cured. Composite structure 502 is sealed beneath vacuum bag 504 to perform a cure of composite structure 502. Vacuum bag 504 provides compaction pressure to composite structure 502. Although first plurality of prepreg plies 508 and second plurality of prepreg plies 510 are uncured, infused functional structure 512 is partially cured. Infused functional structure 512 has a rigidity sufficient for transport of infused functional structure 512. In some illustrative examples, composite structure 502 further comprises adhesive (not depicted) between at least one of first plurality of prepreg plies 508 or second plurality of prepreg plies 510 and infused functional structure 512.

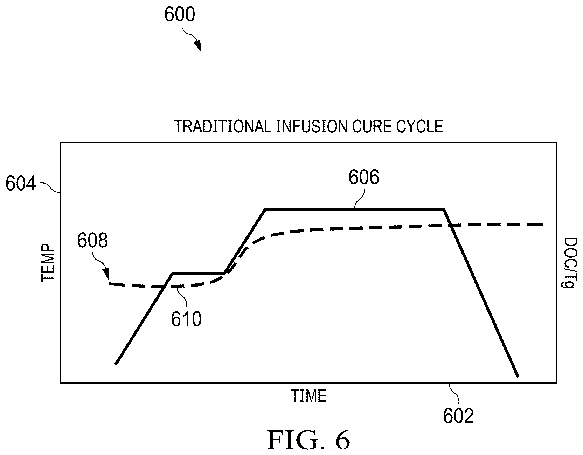

Turning now to Figure 6, an illustration of a cross-sectional view of a composite structure is depicted in accordance with an illustrative example. Cure cycle graph 600 can depict cure cycle 606 for curing composite structure 202 of Figure 2. Cure cycle graph 600 can depict cure cycle 606 for curing a composite structure comprising infused functional structure 302 of Figure 3. Cure cycle graph 600 can depict cure cycle 606 for curing composite structure 502 of Figure 5. Cure cycle graph 600 has time 602 as an x-axis and temperature 604 as a y-axis. Cure cycle 606 rises above B stage degree of cure / glass temperature by time 610. The degree of cure/Tg curve is depicted as curve 608.

Final cure of the composite structure is performed to fully cure the composite layers and infused functional structure. As the temperature of cure cycle 606 exceeds the Tg of the infused functional structure depicted by curve 608, the infused functional structure will soften slightly, allowing it to conform to the composite structure. Conformation of the infused functional structure will mitigate chances of surface profile differences between the infused structure tool side surface and top layer of the plurality of composite plies. In some illustrative examples, if the infused functional structure comprises a heater, powering heater during cure could be used to ensure heating ramp rate meets requirement to raise cure temperature above infused structure Tg for softening.

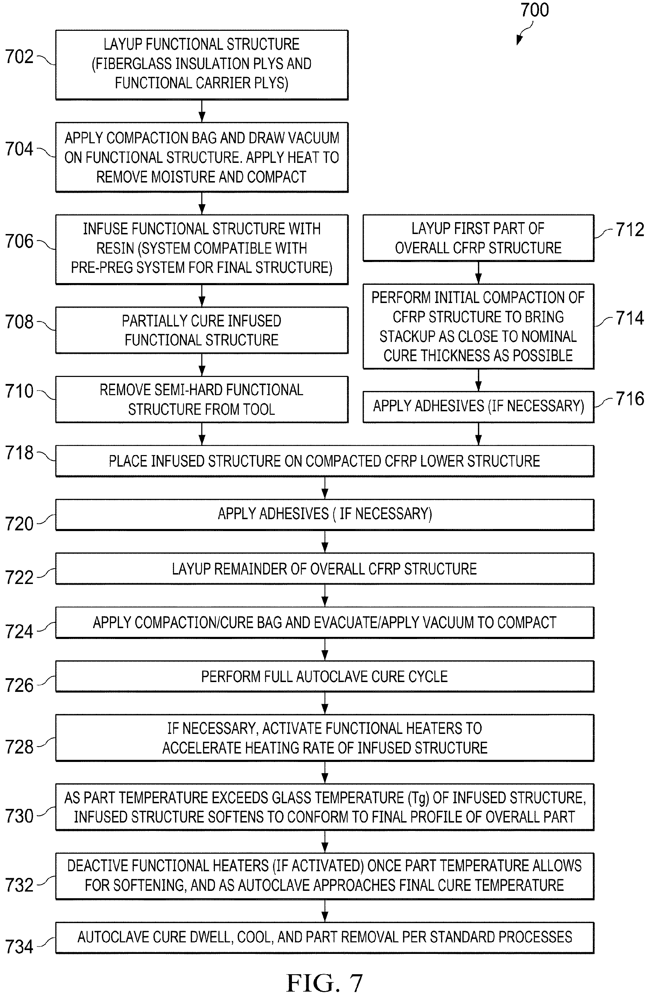

Turning now to Figure 7, a flowchart of a method of forming a composite structure is depicted in accordance with an illustrative example. Method 700 can be implemented to form a portion of aircraft 100 of Figure 1. Method 700 can be implemented to form composite structure 202 of Figure 2. Method 700 can be implemented to form infused functional structure 302 of Figure 3. Method 700 can use an infusion cure cycle depicted in infusion cure cycle graph 400 of Figure 4. Method 700 can be implemented to form composite structure 502 of Figure 5. Method 700 can use a cure cycle of cure cycle graph 600 of Figure 6.

In method 700, a functional structure is laid up in operation 702. Layup Functional Structure (Fiberglass Insulation plys and functional carrier plys (operation 702). The functional structure is then infused, partially cured, and prepared for placement in a composite structure in later steps, operations 704-710. Operations 704-710 create an infused functional structure.

Method 700 applies compaction bag and draws vacuum on functional structure. Apply heat to remove moisture and compact (operation 704). Method 700 infuses functional structure with resin (system compatible with pre-preg system for final structure) (operation 706)

Method 700 partially cures infused functional structure (operation 708). The partial cure produces a partially cured infused functional structure that is sufficiently rigid to transport at room temperature. Remove semi-hard functional structure from tool (operation 710).

Method 700 lays up first part of overall CFRP structure (operation 712). Method 700 performs initial compaction of CFRP structure to bring stackup as close to nominal cure thickness as possible (operation 714). In some of these illustrative examples, the first plurality of composite plies and the second plurality of composite plies are compacted prior to laying up with the infused functional structure.

Method 700 applies adhesives (if necessary) (operation 716). The adhesives can be applied to at least one of a first plurality of composite plies, a second plurality of composite plies, or the infused functional structure.

Method 700 places infused structure on compacted CFRP lower structure (operation 718). Method 700 applies adhesives (if necessary) (operation 720). Method 700 lays up remainder of overall CFRP structure (operation 722)

Method 700 applies compaction/cure bag and evacuate/apply vacuum to compact (operation 724). Method 700 performs full autoclave cure cycle (operation 726). In some illustrative examples, method 700 optionally activates functional heaters to accelerate heating rate of infused structure (operation 728). In method 700, as part temperature exceeds glass temperature (Tg) of infused structure, infused structure softens to conform to final profile of overall part (operation 730).

Method 700 deactivates functional heaters (if activated) once part temperature allows for softening, and as autoclave approaches final cure temperature (operation 732). Method 700 performs autoclave cure dwell, cool, and part removal (operation 734).

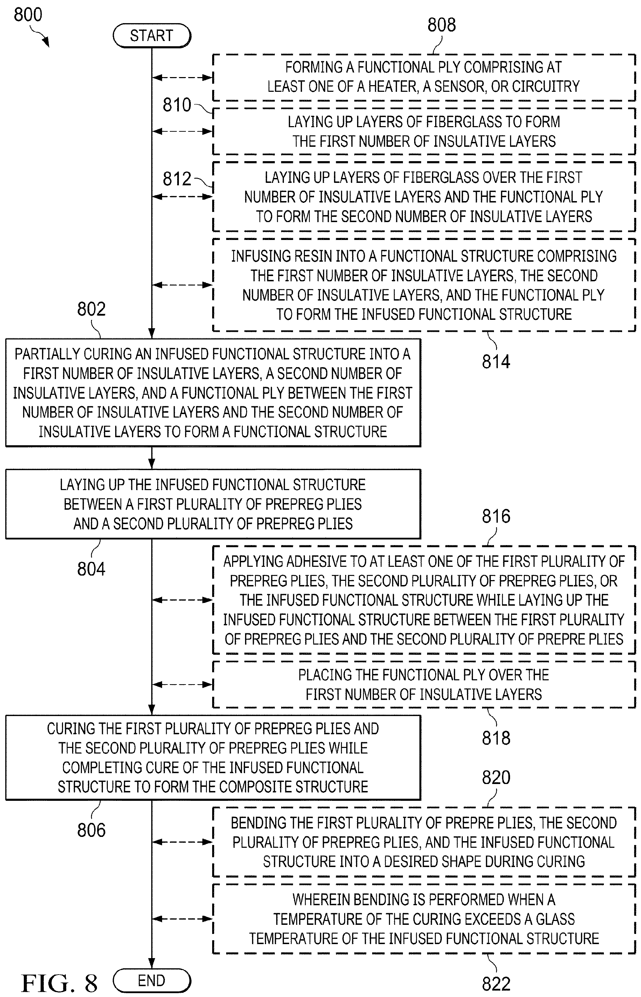

Turning now to Figure 8, a flowchart of a method of forming a composite structure is depicted in accordance with an illustrative example. Method 800 can be implemented to form a portion of aircraft 100 of Figure 1. Method 800 can be implemented to form composite structure 202 of Figure 2. Method 800 can be implemented to form infused functional structure 302 of Figure 3. Method 800 can use an infusion cure cycle depicted in infusion cure cycle graph 400 of Figure 4. Method 800 can be implemented to form composite structure 502 of Figure 5. Method 800 can use a cure cycle of cure cycle graph 600 of Figure 6.

Method 800 partially cures an infused functional structure into a first number of insulative layers, a second number of insulative layers, and a functional ply between the first number of insulative layers and the second number of insulative layers to form a functional structure (operation 802).

Method 800 lays up the infused functional structure between a first plurality of prepreg plies and a second plurality of prepreg plies (operation 804).

Method 800 cures the first plurality of prepreg plies and the second plurality of prepreg plies while completing cure of the infused functional structure to form the composite structure (operation 806). Afterwards, method 800 terminates.

In some illustrative examples, method 800 forms a functional ply comprising at least one of a heater, a sensor, or circuitry (operation 808). In some illustrative examples, method 800 lays up layers of fiberglass to form the first number of insulative layers (operation 810). In some illustrative examples, method 800 lays up layers of fiberglass over the first number of insulative layers and the functional ply to form the second number of insulative layers (operation 812). In some illustrative examples, method 800 infuses resin into a functional structure comprising the first number of insulative layers, the second number of insulative layers, and the functional ply to form the infused functional structure (operation 814).

In some illustrative examples, method 800 applies adhesive to at least one of the first plurality of prepreg plies, the second plurality of prepreg plies, or the infused functional structure while laying up the infused functional structure between the first plurality of prepreg plies and the second plurality of prepreg plies (operation 816). In some illustrative examples, method 800 places the functional ply over the first number of insulative layers (operation 818).

In some illustrative examples, method 800 bends the first plurality of prepreg plies, the second plurality of prepreg plies, and the infused functional structure into a desired shape during curing (operation 820). In some illustrative examples, bending is performed when a temperature of the curing exceeds a glass temperature of the infused functional structure (operation 822).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in illustrative examples. In this regard, each block in the flowcharts or block diagrams may represent at least one of a module, a segment, a function, or a portion of an operation or step.

In some alternative illustrative examples, the function or functions noted in the blocks may occur out of the order noted in the figures. For example, in some cases, two blocks shown in succession may be executed concurrently or substantially concurrently, or the blocks may sometimes be performed in the reverse order, depending upon the functionality involved. Also, other blocks may be added in addition to the illustrated blocks in a flowchart or block diagram. Some blocks may be optional. For example, any of operation 808 through operation 822 may be optional.

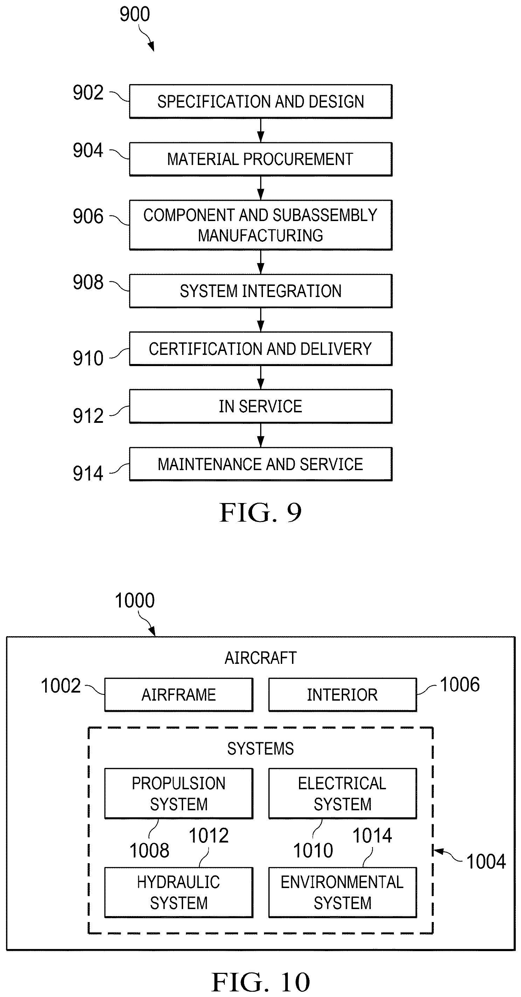

Illustrative examples of the present disclosure may be described in the context of aircraft manufacturing and service method 900 as shown in Figure 9 and aircraft 1000 as shown in Figure 10. Turning first to Figure 9, an illustration of an aircraft manufacturing and service method in a form of a block diagram is depicted in accordance with an illustrative example. During pre-production, aircraft manufacturing and service method 900 may include specification and design 902 of aircraft 1000 in Figure 10 and material procurement 904.

During production, component and subassembly manufacturing 906 and system integration 908 of aircraft 1000 takes place. Thereafter, aircraft 1000 may go through certification and delivery 910 in order to be placed in service 912. While in service 912 by a customer, aircraft 1000 is scheduled for routine maintenance and service 914, which may include modification, reconfiguration, refurbishment, or other maintenance and service.

Each of the processes of aircraft manufacturing and service method 900 may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to Figure 10, an illustration of an aircraft in a form of a block diagram is depicted in which an illustrative example may be implemented. In this and certain other examples, aircraft 1000 is produced by aircraft manufacturing and service method 900 of Figure 9 and may include airframe 1002 with plurality of systems 1004 and interior 1006. Examples of systems 1004 include one or more of propulsion system 1008, electrical system 1010, hydraulic system 1012, and environmental system 1014. Any number of other systems may be included.

Apparatuses and methods embodied herein may be employed during at least one of the stages of aircraft manufacturing and service method 900. One or more illustrative examples may be manufactured or used during at least one of component and subassembly manufacturing 906, system integration 908, in service 912, or maintenance and service 914 of Figure 9.

The illustrative examples provide a process for integrating functional components into structures fabricated from prepreg materials. The functional component is laid-up within fiberglass insulation plies and is infused with a resin compatible with the prepreg material, forming a fiberglass substructure as known as the infused functional structure. The substructure is partially cured such that it can be carefully handled, but not fully cured. The partially cured substructure is laid-up, such that it is sandwiched within several prepreg layers. In some illustrative examples the prepreg layers can be carbon fiber (CFRP) prepreg layers. The sandwiched structure is compacted under a vacuum bag and heated to a fully cured state.

Due to the partial cure of the substructure, the substructure is able to conform to the profile of the composite structure when heated. Conformation of the substructure can mitigate surface profile mismatch.

The illustrative examples provide a process for integrating functional components into structures fabricated from prepreg materials. The first part of the process includes laying-up the functional component between a plurality of fiberglass insulation plies and infusing this fiberglass sub-structure with a resin capable with the prepreg material. The fiberglass substructure is partially cured such that it can be carefully handled but is not fully cured. The illustrative examples aid in integrating functional elements, such as heaters, structural health monitoring, and circuitry (antennas, lighting, etc.) into structures made from prepreg materials.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The examples selected are chosen and described in order to best explain the principles of the present disclosure, the practical application, and to enable others of ordinary skill in the art to understand the disclosure for various examples with various modifications as are suited to the particular use contemplated.

Further examples are set out in the clauses below.

Clause 1. A composite structure, for example a CFRP structure, comprising: a first plurality of prepreg plies; a second plurality of prepreg plies; and an infused functional structure between the first plurality of prepreg plies and the second plurality of prepreg plies, the infused functional structure comprising a first number of insulative layers, a second number of insulative layers, a functional ply comprising a number of functional components (positioned) between the first number of insulative layers and the second number of insulative layers, and a resin infused into the first number of insulative layers and the second number of insulative layers.

Clause 2. The composite structure of clause 1, wherein the first number of insulative layers comprise fiberglass.

Clause 3. The composite structure of clause 1 or 2, wherein the number of functional components comprises at least one of a heater, a sensor, or circuitry.

Clause 4. The composite structure of any of clauses 1 to 3, wherein the resin in the infused functional structure is compatible with resin of the first plurality of prepreg plies and the second plurality of prepreg plies.

Clause 5. The composite structure of any of clauses 1 to 4, wherein the first plurality of prepreg plies and the second plurality of prepreg plies comprise carbon fiber composite.

Clause 6. The composite structure of any of clauses 1 to 5, wherein the infused functional structure is partially cured.

Clause 7. The composite structure of clause 6, wherein the infused functional structure has a rigidity sufficient for transport of the infused functional structure.

Clause 8. The composite structure of any of clauses 1 to 7, further comprising: adhesive between at least one of the first plurality of prepreg plies or the second plurality of prepreg plies and the infused functional structure.

Clause 9. A composite structure, for example a CFRP structure, comprising: a first plurality of composite plies; a second plurality of composite plies; and an infused functional structure between the first plurality of composite plies and the second plurality of composite plies, the infused functional structure comprising a first number of insulative layers comprising a cured resin, a second number of insulative layers comprising the cured resin, and a functional ply comprising a number of functional components (positioned) between the first number of insulative layers and the second number of insulative layers.

Clause 10. The composite structure of clause 9, wherein the first number of insulative layers comprise fiberglass.

Clause 11. The composite structure of clause 9 or 10, wherein the number of functional components comprises at least one of a heater, a sensor, or circuitry.

Clause 12. The composite structure of any of clauses 9 to 11, wherein the first plurality of composite plies and the second plurality of composite plies comprise carbon fiber composite.

Clause 13. The composite structure of any of clauses 9 to 12, wherein the cured resin is different from but compatible with a resin in the first plurality of composite plies and the second plurality of composite plies.

Clause 14. A method of forming a composite structure, for example a CFRP structure, comprising: partially curing an infused functional structure into a first number of insulative layers, a second number of insulative layers, and a functional ply between the first number of insulative layers and the second number of insulative layers to form a functional structure; laying up the infused functional structure between a first plurality of prepreg plies and a second plurality of prepreg plies; and curing the first plurality of prepreg plies and the second plurality of prepreg plies while completing cure of the infused functional structure to form the composite structure.

Clause 15. The method of clause 14, further comprising: laying up layers of fiberglass to form the first number of insulative layers; and laying up layers of fiberglass over the first number of insulative layers and the functional ply to form the second number of insulative layers.

Clause 16. The method of clause 15, further comprising: forming a functional ply comprising at least one of a heater, a sensor, or circuitry; and placing the functional ply over the first number of insulative layers.

Clause 17. The method of any of clauses 14 to 16, further comprising: infusing resin into a functional structure comprising the first number of insulative layers, the second number of insulative layers, and the functional ply to form the infused functional structure.

Clause 18. The method of any of causes 14 to 17, further comprising: bending the first plurality of prepreg plies, the second plurality of prepreg plies, and the infused functional structure into a desired shape during curing.

Clause 19. The method of clause 18, wherein bending is performed when a temperature of the curing exceeds a glass temperature of the infused functional structure.

Clause 20. The method of any of clauses 14 to 19, further comprising: applying adhesive to at least one of the first plurality of prepreg plies, the second plurality of prepreg plies, or the infused functional structure while laying up the infused functional structure between the first plurality of prepreg plies and the second plurality of prepreg plies.

## Claims

1. A composite structure (202) comprising:
a first plurality of prepreg plies (231);
a second plurality of prepreg plies (233); and
an infused functional structure (204) between the first plurality of prepreg plies (231) and the second plurality of prepreg plies (233), the infused functional structure (204) comprising:
a first number of insulative layers (206);
a second number of insulative layers (210);
a functional ply (208) comprising a number of functional components (214) positioned between the first number of insulative layers (206) and the second number of insulative layers (210); and
a resin (222) infused into the first number of insulative layers (206) and the second number of insulative layers (210).

2. The composite structure (202) of claim 1, wherein the first number of insulative layers (206) comprise fiberglass (212).

3. The composite structure (202) of claim 1 or 2, wherein the number of functional components (214) comprises at least one of a heater (216), a sensor (218), or circuitry (220).

4. The composite structure (202) of any preceding claim, wherein the resin (222) in the infused functional structure (204) is compatible with resin (234) of the first plurality of prepreg plies (231) and the second plurality of prepreg plies (233).

5. The composite structure (202) of any preceding claim, wherein the first plurality of prepreg plies (231) and the second plurality of prepreg plies (233) comprise carbon fiber composite (235, 237).

6. The composite structure (202) of any preceding claim, wherein the infused functional structure (204) is partially cured.

7. The composite structure (202) of claim 6, wherein the infused functional structure (204) has a rigidity (228) sufficient for transport of the infused functional structure (204).

8. The composite structure (202) of any preceding claim, further comprising:
adhesive (248) between (i) at least one of the first plurality of prepreg plies (231) or the second plurality of prepreg plies (233) and (ii) the infused functional structure (204).

9. A method (800) of forming a composite structure (202) comprising:
partially (802) curing an infused functional structure (204) into a first number of insulative layers (206), a second number of insulative layers (210), and a functional ply (208) between the first number of insulative layers (206) and the second number of insulative layers (210) to form a functional structure;
laying up (804) the infused functional structure (204) between a first plurality of prepreg plies (231) and a second plurality of prepreg plies (233); and
curing (806) the first plurality of prepreg plies (231) and the second plurality of prepreg plies (233) while completing cure of the infused functional structure (204) to form the composite structure (202).

10. The method (800) of claim 9, further comprising:
laying up (810) layers of fiberglass (212) to form the first number of insulative layers (206); and
laying up (812) layers of fiberglass (212) over the first number of insulative layers (206) and the functional ply (208) to form the second number of insulative layers (210).

11. The method (800) of claim 10, further comprising:
forming (808) a functional ply (208) comprising at least one of a heater (216), a sensor (218), or circuitry (220); and
placing (818) the functional ply (208) over the first number of insulative layers (206).

12. The method (800) of any of claims 9 to 11, further comprising:
infusing (814) resin (222) into a functional structure comprising the first number of insulative layers (206), the second number of insulative layers (210), and the functional ply (208) to form the infused functional structure (204).

13. The method (800) of any of claims 9 to 12, further comprising:
bending (820) the first plurality of prepreg plies (231), the second plurality of prepreg plies (233), and the infused functional structure (204) into a desired shape during curing.

14. The method (800) of claim 13, wherein (822) bending is performed when a temperature of the curing exceeds a glass temperature of the infused functional structure (204).

15. The method (800) of any of claims 9 to 14, further comprising:
applying (816) adhesive (248) to at least one of the first plurality of prepreg plies (231), the second plurality of prepreg plies (233), or the infused functional structure (204) while laying up the infused functional structure (204) between the first plurality of prepreg plies (231) and the second plurality of prepreg plies (233).
